# FASCICULE DE BREVET EUROPEEN

(11) **EP 3 242 792 B1**
(45) Date de publication et mention de la délivrance du brevet: **15.12.2021**
(21) Numéro de dépôt: 16700186.6
(22) Date de dépôt: 08.01.2016
(51) Int. Cl.: B29D 30/06, B29D 30/66, B29C 33/38, B29C 33/10, B29C 45/26, B29C 45/14

(54) **ELÉMENT DE GARNITURE POUR MOULE DE PNEUMATIQUE ET PROCÉDÉ DE FABRICATION ASSOCIÉ**
MATRIXELEMENT FÜR REIFENFORM UND ZUGEHÖRIGES HERSTELLUNGSVERFAHREN
MATRIX ELEMENT FOR TYRE MOULD AND ASSOCIATED MANUFACTURING METHOD

(30) Priorité: 08.01.2015 FR 1550134
(43) Date de publication de la demande: 15.11.2017
(73) Titulaire: COMPAGNIE GENERALE DES ETABLISSEMENTS MICHELIN, 63000 Clermont-Ferrand (FR)
(72) Inventeur: CALVEL, Romain, 63040 Clermont-Ferrand Cedex 09 (FR); BONCOMPAGNE, Thibault, 63040 Clermont-Ferrand Cedex 09 (FR)
(74) Mandataire: Roussy, Delphine
(86) Numéro de dépôt international: PCT/EP2016/050263
(87) Numéro de publication internationale: WO 2016/110562

(56) Documents cités:
- EP-A1- 2 689 920
- WO-A1-00/23238
- WO-A1-2014/199550
- DE-A1-102010 000 242
- FR-A1- 2 881 680
- FR-A1- 2 996 798
- JP-A- 2011 031 452
- KR-A- 20020 003 020
- US-A- 5 059 380

## Description

La présente invention concerne un élément de garniture obtenu par fabrication additive à base de poudre et comprenant des moyens pour l'injection d'un fluide ou d'un solide. L'élément de garniture est destiné à être utilisé dans un moule de cuisson ou vulcanisation pour pneumatique de véhicule, et notamment dans un moule du type à secteurs. La présente invention concerne également un procédé pour l'obtention d'un tel élément de garniture.

Un moule à secteurs comprend principalement deux coquilles latérales assurant chacune le moulage d'un des flancs latéraux du pneumatique, et une pluralité de secteurs assurant le moulage de la bande de roulement dudit pneumatique et mobiles radialement entre une position d'ouverture et une position de fermeture du moule. Les coquilles et les secteurs définissent un espace intérieur destiné à être mis en contact avec l'ébauche du pneumatique non vulcanisée.

Pour mouler la bande de roulement du pneumatique, les secteurs du moule comprennent des éléments de garniture. Par « élément de garniture », on entend une partie du moule qui comporte une surface de moulage permettant de mouler au moins une partie de la surface de roulement de cette bande de roulement.

Il est possible de réaliser un élément de garniture par un procédé de fabrication additive à base de poudre par frittage ou par fusion de grains de ladite poudre à l'aide d'un faisceau énergétique. Par « faisceau énergétique », on entend un rayonnement électromagnétique (par exemple un faisceau laser) ou un faisceau de particules (par exemple un faisceau d'électrons).

L'intérêt de la fabrication par fusion sélective de couches de poudre superposées, plus communément nommée frittage, réside principalement dans le fait que la forme de ces éléments de garniture peut être modélisée par ordinateur et que les éléments de garniture peuvent ensuite être fabriqués sur la base de cette modélisation par sélective est réalisée par un faisceau laser, on parle de frittage laser. La technique de frittage laser consiste à fabriquer la pièce couche après couche, en empilant les couches de poudre consolidées et fusionnées les unes sur les autres par le faisceau laser selon une direction d'empilage.

La demande de brevet WO-A1-2012/156439 décrit un élément de garniture particulier obtenu en partie par cette technique de frittage laser. L'élément de garniture est constitué d'une partie de moulage frittée permettant de mouler la bande de roulement du pneumatique, et d'une embase de support non frittée solidaire de la partie de moulage et formant une interface avec le moule associé. La partie de moulage frittée comprend des cordons et des lamelles pour former les sculptures de la bande de roulement du pneumatique.

WO-A-00/23238 et DE10,2010,000242-A1 montrent d'autres états de la technique connus.

De manière connue en soi, les sculptures de la bande de roulement du pneumatique jouent un rôle fondamental pour l'adhérence de celui-ci, principalement dans le cas d'un roulage sur un sol mouillé et/ou enneigé.

De sorte à conserver au cours du temps un pneumatique présentant de bonnes performances d'adhérence et de drainage des eaux, il est connu de prévoir pour la bande de roulement du pneumatique des sculptures évolutives en fonction de son état d'usure. Dans ce but, des cavités sont formées sous la surface de roulement de la bande de roulement à l'état neuf du pneumatique et sont destinées après usure partielle à former une nouvelle sculpture dont les caractéristiques sont adaptées à l'épaisseur réduite de la bande de roulement. Pour plus de détails sur de telles sculptures évolutives, on pourra par exemple se référer à la demande de brevet FR-A1-2 763 892 ou aux modes de réalisation des figures 12 et 13 de la demande de brevet FR-A1-2 881 680.

Dans ce document antérieur, pour obtenir le moulage des cavités sous la surface de roulement de la bande de roulement, le moule de cuisson associé comprend une pluralité de doigts rapportés sur chaque coquille latérale et faisant saillie par rapport à la surface de moulage de ladite coquille.

Pour pouvoir procéder au démoulage du pneumatique, il est nécessaire de réaliser chaque coquille latérale en deux parties et de prévoir entre elles des moyens de liaison autorisant une rotation de la partie supportant les doigts par rapport à l'autre partie. Ceci augmente sensiblement le coût de fabrication du moule. En outre, la fixation des doigts sur les coquilles latérales ne permet pas le moulage de cavités dans toutes les zones souhaitées de la bande de roulement du pneumatique.

Une solution alternative pour obtenir le moulage de sculptures évolutives selon l'état d'usure du pneumatique consiste à fixer sur les secteurs du moule de cuisson associé des lamelles conformées pour obtenir des découpures du type goutte d'eau dans la bande de roulement du pneumatique. La figure 6 du document FR-A1-2 961 741 divulgue une telle lamelle qui est obtenue par frittage laser. En effet, cette technique est bien adaptée à la fabrication d'éléments de petites dimensions et de formes complexes, tels que ces lamelles, qui sont difficiles à fabriquer avec d'autres procédés.

Cependant, pour obtenir des découpures du type goutte d'eau, de telles lamelles comprennent un corps principal présentant une section relativement faible. Des déformations et/ou des détériorations des lamelles peuvent se produire en cours de fabrication pouvant provoquer l'apparition de concentrations de contraintes et de micro fissures.

On comprend donc qu'il existe un besoin de proposer une solution simple et robuste permettant de réaliser le moulage de sculptures évolutives dans la bande de roulement d'un pneumatique.

L'invention concerne un élément de garniture pour moule de pneumatique comprenant un corps délimitant une surface de moulage destinée à mouler au moins en partie une surface de roulement du pneumatique. L'élément de garniture comprend en outre au moins une buse d'injection disposée sur le corps et pourvue d'au moins un orifice de sortie. L'élément de garniture comprend également au moins un canal d'alimentation s'étendant à l'intérieur du corps et de la buse d'injection en étant en communication avec ledit orifice de sortie. L'élément de garniture comprend encore au moins un organe d'obturation mobile par rapport à la buse d'injection entre une position de fermeture et une position d'ouverture dudit orifice de sortie. Le corps, la buse d'injection et l'organe d'obturation sont fabriqués par dépose et fusion sélective de couches de poudre empilées.

On entend par « moule », un ensemble d'éléments séparés qui, par rapprochement relatif, permettent de délimiter un espace intérieur de moulage.

On entend par « surface de roulement » d'un pneumatique, la surface de la bande de roulement destinée à entrer en contact avec la chaussée lorsque le pneumatique roule.

On entend par « élément de garniture », une partie du moule destinée à permettre le moulage de tout ou partie de la surface de roulement du pneumatique.

On entend par « poudre », une poudre ou un mélange de poudres. La poudre peut par exemple être métallique, plastique ou minérale, par exemple céramique.

L'élément de garniture permet d'obtenir un moulage de sculptures évolutives dans la bande de roulement du pneumatique de façon simple et robuste. En effet, la buse d'injection permet de réaliser l'injection de matière (fluide ou solide) lors de l'étape de moulage du pneumatique à l'intérieur du moule associé, ce qui permet la création d'une cavité formée sous la surface de roulement du pneumatique. L'organe d'obturation permet d'éviter la pénétration de la gomme de l'ébauche du pneumatique à l'intérieur de la buse d'injection avant l'injection. On évite ainsi le fluage de la gomme à l'intérieur du canal d'alimentation. Le corps, la buse d'injection et l'organe d'obturation de l'élément de garniture sont fabriqués en même temps lors des opérations de dépose et de fusion sélective de couches de poudre empilées.

Dans un mode de réalisation préféré, la buse d'injection est venue de matière avec le corps et s'étend en saillie par rapport à la surface de moulage dudit corps. On entend par une buse d'injection « venue de matière » avec le corps, une buse d'injection réalisée monobloc avec le corps.

Alternativement, la buse d'injection peut être montée mobile sur le corps entre une position rétractée à l'intérieur dudit corps et une position déployée dans laquelle elle s'étend en saillie par rapport à la surface de moulage dudit corps.

De préférence, l'organe d'obturation est mobile de la position de fermeture vers la position d'ouverture sous l'effet de la pression d'un fluide ou d'un solide introduit dans le canal d'alimentation. On dispose ainsi d'un organe d'obturation configuré pour permettre le passage de la position de fermeture vers la position d'ouverture uniquement sous l'effet de la pression de la matière injectée (fluide ou solide). Il n'est donc pas nécessaire de prévoir des moyens spécifiques pour commander le déplacement de l'organe d'obturation. En outre, la pression de l'ébauche du pneumatique introduite dans le moule permet de maintenir l'organe d'obturation dans la position de fermeture tant que l'injection de matière n'est pas effective. L'organe d'obturation est monté mobile librement par rapport à la buse d'injection.

L'orifice de sortie peut avantageusement déboucher sur une surface frontale de la buse d'injection sensiblement parallèle à la surface de moulage du corps.

De manière avantageuse, le canal d'alimentation comprend des moyens de raccordement à une source d'alimentation qui est extérieure à l'élément de garniture.

Dans un mode de réalisation, l'organe d'obturation est mobile en translation par rapport à la buse d'injection. L'organe d'obturation peut comprendre un piston pourvu d'une tige montée à l'intérieur du canal d'alimentation et d'une tête d'obturation apte à obturer ledit orifice de sortie dans la position de fermeture.

Alternativement, l'organe d'obturation peut être mobile à rotation par rapport à la buse d'injection. L'organe d'obturation peut comprendre un volet venant en appui contre la surface frontale de la buse d'injection dans la position de fermeture. Le volet peut être monté à rotation par l'intermédiaire d'une charnière disposée sur la buse.

De préférence, le corps comprend des moyens d'éventation s'étendant à partir de la surface de moulage et destinés à permettre une évacuation d'air lors du moulage du pneumatique. Les moyens d'éventation sont en communication avec le canal d'alimentation. Ainsi, les moyens d'éventation prévus pour éviter d'emprisonner de l'air entre la surface de moulage et l'ébauche du pneumatique lors de l'étape de vulcanisation du pneumatique sont également utilisés pour réaliser l'injection de cet air par la buse d'injection. Ces moyens d'éventation remplissent donc une double fonction.

De préférence, l'élément de garniture comprend également une pluralité de protubérances s'étendant en saillie à partir de la surface de moulage du corps et destinées à mouler des découpures dans la bande de roulement du pneumatique.

On entend par « découpures » dans la bande de roulement, l'espace délimité par des parois de matière s'étendant à partir de la surface de roulement, se faisant face et distantes l'une de l'autre d'une distance non nulle. La ou les cavités formées par injection peuvent être décalées vers l'intérieur du pneumatique par rapport aux découpures.

Les protubérances peuvent par exemple être des cordons et/ou des lamelles destinés respectivement à former des rainures et/ou des incisions dans la bande de roulement du pneumatique.

Dans un mode de réalisation, la buse d'injection s'étend en saillie à partir de la surface de moulage du corps. Alternativement, la buse peut s'étendre en saillie à partir d'une surface frontale libre d'une des protubérances, par exemple d'un des cordons.

De préférence, l'orifice de sortie de la buse d'injection est décalé du côté opposé au corps par rapport aux protubérances.

L'invention concerne également un moule pour pneumatique du type comprenant une bande de roulement et deux flancs latéraux. Le moule comprend des première et deuxième coquilles destinées à assurer le moulage des flancs latéraux du pneumatique, et une pluralité de secteurs répartis dans le sens circonférentiel et destinés à assurer le moulage de la bande de roulement dudit pneumatique. Chaque secteur comprend au moins un élément de garniture tel que défini précédemment.

L'invention concerne encore un procédé de fabrication d'au moins un élément de garniture, l'élément de garniture comprenant un corps délimitant une surface de moulage destinée à mouler au moins en partie une surface de roulement du pneumatique, le procédé comprenant les étapes suivantes :
- a) fabrication par dépose et fusion sélective de couches de poudre empilées du corps de l'élément de garniture, d'au moins une buse d'injection disposée sur ledit corps et pourvue d'au moins un orifice de sortie, et d'un organe d'obturation dudit orifice de sortie, la buse d'injection étant rendue solidaire du corps et l'organe d'obturation étant rendu solidaire au moins de ladite buse lors des étapes de fusion sélective des couches de poudre,
- b) formation au moins partielle d'au moins un canal d'alimentation s'étendant à l'intérieur du corps et de la buse d'injection en étant en communication avec l'orifice de sortie de ladite buse au cours des étapes de dépose et de fusion sélective des couches de poudre, et
- c) désolidarisation partielle de l'organe d'obturation et de la buse d'injection après les étapes de dépose et de fusion sélective des couches de poudre pour permettre une mobilité de l'organe d'obturation entre une position de fermeture et une position d'ouverture de l'orifice de sortie de la buse d'injection.

Dans un mode de mise en œuvre, selon une fusion modélisée des couches de poudre, un jeu est prévu entre une partie de l'organe d'obturation et une partie en regard de la buse d'injection qui est compris entre 0,05 et 0,5 mm, et de préférence égal à 0,1 mm de sorte que la poudre déposée présente entre lesdites parties en regard est tout ou partie fusionnée par diffusion de chaleur rendant solidaires localement l'organe d'obturation et la buse d'injection.

Selon un mode de mise en œuvre dans lequel l'organe d'obturation comprend un piston pourvu d'une tige montée à l'intérieur du canal d'alimentation et d'une tête d'obturation, le corps de l'élément de garniture est fabriqué de sorte à s'étendre de façon inclinée par rapport à un plateau de fabrication sur lequel est déposée et fusionnée une première couche de poudre.

L'invention concerne également un procédé de moulage d'un pneumatique à l'aide d'un moule comprenant des première et deuxième coquilles destinées à assurer le moulage des flancs latéraux du pneumatique, et une pluralité de secteurs répartis dans le sens circonférentiel et destinés à assurer le moulage de la bande de roulement dudit pneumatique, dans lequel l'ébauche du pneumatique non vulcanisée à mouler est mise en contact avec les coquilles et les secteurs du moule, l'ébauche est chauffée, puis un fluide est injecté sous la surface extérieure de l'ébauche qui est en contact avec le moule et qui est destinée à former la surface de roulement du pneumatique pour créer au moins une cavité dans l'épaisseur de ladite ébauche et sous ladite surface de roulement.

La présente invention sera mieux comprise à la lecture de la description détaillée de modes de réalisation pris à titre d'exemples nullement limitatifs et illustrés par les dessins annexés sur lesquels :
- la figure 1 est une vue schématique en perspective d'un élément de garniture selon un premier exemple de réalisation,
- la figure 2 est une vue partielle en coupe de l'élément de garniture de la figure 1,
- la figure 3 est une vue schématique en coupe illustrant partiellement un procédé de fabrication de l'élément de garniture de la figure 1 par frittage laser selon un premier exemple de mise en œuvre,
- les figures 4 et 5 sont des vues de détail de la figure 3,
- les figures 6a à 6e sont des vues partielles en coupe illustrant un procédé de moulage d'un pneumatique à l'aide de l'élément de garniture de la figure 1, et
- les figures 7 à 9 sont des vues partielles en coupe d'éléments de garniture selon des deuxième, troisième et quatrième exemples de réalisation.

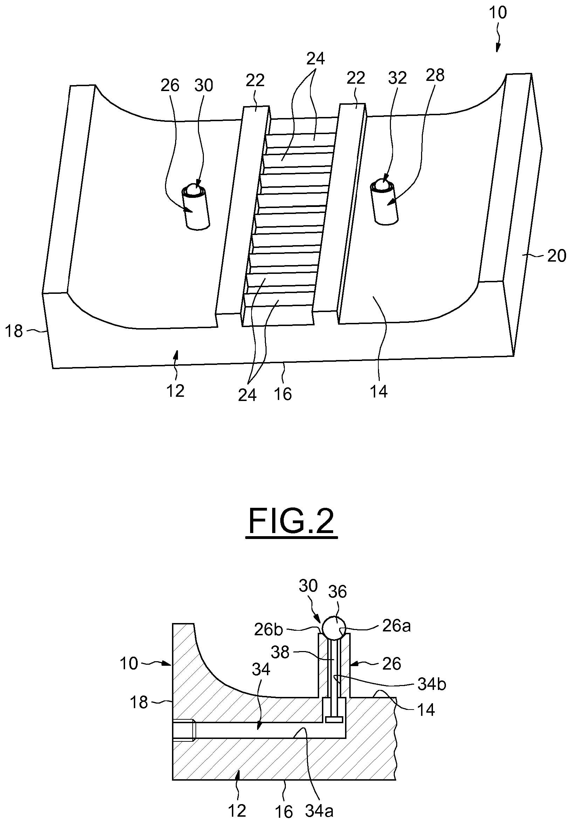

Sur la figure 1 est représenté un élément de garniture, référencé 10 dans son ensemble, utilisé dans un moule de cuisson ou vulcanisation pour pneumatique de véhicule. Comme cela sera décrit plus en détail par la suite, l'élément de garniture 10 est fabriqué par dépose et fusion sélective de couches de poudre empilées.

L'élément de garniture 10 comprend un corps 12 qui est délimité par une première surface 14 et par une seconde surface 16 opposée à la première surface. La première surface 14 forme une surface de moulage destinée à mouler tout ou partie de la surface de roulement du pneumatique. La seconde surface 16 est destinée à être en contact avec une autre partie du moule de cuisson sur lequel est rapporté l'élément de garniture 10. La seconde surface 16 forme une surface d'ancrage de l'élément de garniture 10 sur ladite autre partie du moule de cuisson. Dans le cas d'un moule du type à secteurs, l'élément de garniture 10 est fixé sur un des secteurs du moule. Les première et seconde surfaces 14, 16 délimitent l'épaisseur du corps 12. Le corps 12 comprend également deux surfaces latérales opposées 18, 20 délimitant la seconde surface 16.

L'élément de garniture 10 comprend également une pluralité de protubérances 22, 24 s'étendant en saillie à partir de la surface 14 de moulage. Les protubérances 22 constituent des cordons destinés à mouler des rainures dans la bande de roulement du pneumatique. Par cordons, on entend une protubérance dont la largeur est supérieure ou égale à 2 mm. Les protubérances 24 constituent des lamelles destinées à mouler des incisions dans la bande de roulement du pneumatique. Par lamelles, on entend une protubérance dont la largeur est inférieure à 2 mm. Dans l'exemple de réalisation illustré, les protubérances 24 formant lamelles s'étendent perpendiculairement aux protubérances 22 formant cordons. Les protubérances 22, 24 sont venues de matière avec le corps 12.

L'élément de garniture 10 comprend encore deux buses 26, 28 d'injection s'étendant en saillie par rapport à la surface 14 de moulage du corps, et deux organes d'obturation 30, 32 associés chacun à l'une des buses. Les buses 26, 28 sont disposées latéralement de part et d'autre des protubérances 22, 24. La disposition et le nombre de buses 22, 24 indiqués ici dans le mode de réalisation illustré ne sont nullement limitatifs. Les buses 26, 28 et les organes d'obturation 30, 32 étant ici respectivement identiques, on décrira uniquement l'un d'entre eux.

La buse 26 d'injection s'étend à partir de la surface 14 de moulage du corps. La buse 26 d'injection s'étend ici transversalement à la surface 14 de moulage. La buse 26 d'injection est venue de matière avec le corps 12. Dans l'exemple de réalisation illustré, la buse 26 d'injection présente une forme générale tubulaire. Dans l'exemple de réalisation illustré, la buse 26 s'étend au-delà des protubérances 22, 24.

Comme illustré plus visiblement à la figure 2, la buse 26 d'injection comprend un orifice 26a de sortie. Ledit orifice débouche sur une surface frontale 26b d'extrémité de la buse qui est située du côté opposé à la surface 14 de moulage du corps. Ladite surface frontale 26b est parallèle à la surface 14 de moulage.

L'élément de garniture 10 comprend également un canal 34 d'alimentation s'étendant à l'intérieur du corps 12 et de la buse 26 d'injection. Le canal 34 débouche dans l'orifice 26a de sortie de la buse. Le canal 34 s'étend dans l'épaisseur du corps 12 et s'étend longitudinalement à l'intérieur de la buse 26 d'injection. Dans l'exemple de réalisation illustré, le canal 34 s'étend à partir de la surface latérale 18 du corps. Le canal 34 comprend ici une portion cylindrique 34a de grand diamètre s'étendant à partir de la surface latérale 18 dans l'épaisseur du corps 12 et qui est prolongée par une portion cylindrique 34b de petit diamètre s'étendant le long de la buse 26 d'injection. Le canal 34 permet le raccordement à une source d'alimentation extérieure (non représentée) pour l'injection d'un fluide ou d'un solide. À cet égard, la partie du canal 34 débouchant sur la surface latérale 18 du corps comprend un filetage pour assurer ce raccordement. Dans l'exemple de réalisation illustré, un canal 34 d'alimentation est propre à chaque buse 26. Alternativement, il est possible de prévoir un canal d'alimentation commun à l'ensemble des buses.

L'organe d'obturation 30 se présente ici sous la forme d'un piston pourvu d'une tête 36 d'obturation et d'une tige 38 de support de la tête. La tête 36 est prévue pour venir obturer l'orifice 26a de sortie de la buse. La tête 36 est située en dehors de ladite buse. La tige 38 s'étend à l'intérieur du canal 34 d'alimentation. Comme cela sera décrit plus en détail par la suite, l'organe d'obturation 30 est mobile en translation par rapport à la buse 26 d'injection et au corps 12. L'organe d'obturation 30 est mobile entre une position de fermeture de l'orifice 26a de sortie de la buse illustrée à la figure 2 et une position d'ouverture dudit orifice. Dans la position de fermeture, la tête 36 de l'organe d'obturation recouvre l'orifice 26a de sortie. Dans la position d'ouverture, la tête 36 est située à distance de l'orifice 26a.

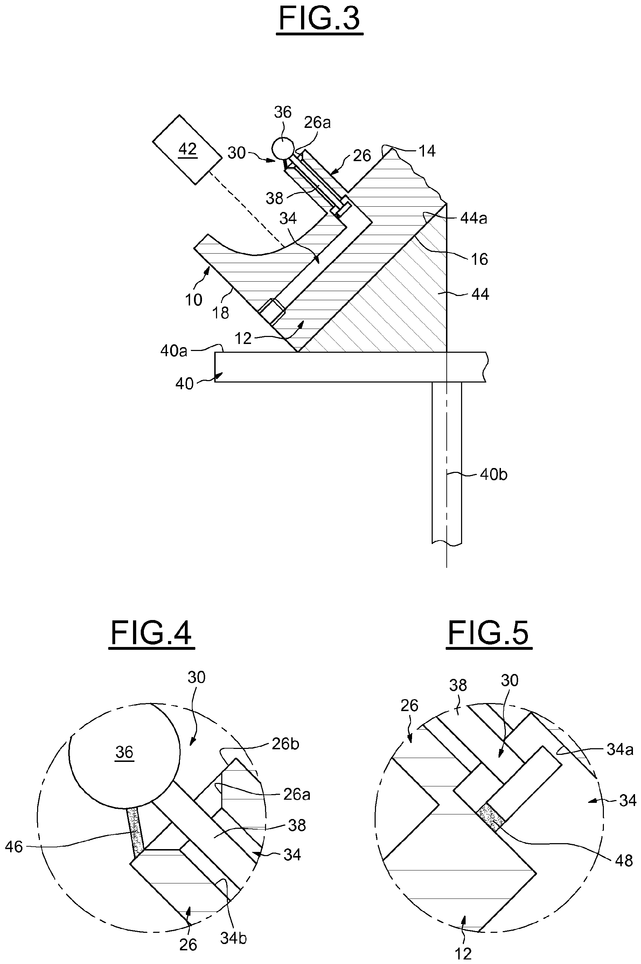

La figure 3 illustre une étape du procédé de fabrication de l'élément de garniture 10. Ce procédé comprend une pluralité d'étapes successives de dépose de couches de poudre et d'agglomération par fusion sélective de la poudre. La poudre peut par exemple être métallique, plastique ou minérale, par exemple céramique.

Le procédé débute par une étape de dépose d'une première couche de poudre sur une surface de travail 40a d'un plateau 40 de fabrication. Le plateau 40 de fabrication est mobile en translation selon un axe 40b vertical. Après dépose, la première couche s'étend sensiblement horizontalement sur la surface de travail 40a. Ensuite, une source énergétique 42, par exemple du type laser, émet un faisceau énergétique dont l'orientation est contrôlée par des miroirs galvanométriques (non représentés). Une lentille optique (non représentée) permet de focaliser le faisceau énergétique afin de chauffer la couche de poudre selon un motif correspondant à la section souhaitée, et ainsi réaliser de manière sélective la fusion de la poudre.

Après l'étape de fusion de la première couche déposée, le plateau 40 de fabrication est abaissé de l'épaisseur de cette couche et une deuxième couche est déposée pour recouvrir la première couche de poudre qui est en partie fusionnée. À titre indicatif, l'épaisseur d'une couche de poudre peut varier de quelques micromètres, par exemple 10 µm, à plusieurs centaines de micromètres, par exemple 500 µm. Ensuite, la fusion sélective de la deuxième couche est réalisée comme précédemment. Ces étapes sont à nouveau répétées pour former par empilage de couches fusionnées l'élément de garniture 10.

Dans le mode de mise en œuvre illustré, l'élément de garniture 10 est fabriqué de façon inclinée par rapport à la surface de travail 40a du plateau de fabrication. Un support 44 est formé dans ce but sur la surface de travail 40a lors des étapes de dépose et de fusion sélective des couches de poudre. Ce support 44 est utilisé uniquement pour la fabrication de l'élément de garniture 10. La surface 16 de l'élément de garniture 10 s'étend à partir d'une surface supérieure 44a inclinée du support 44. Ainsi, lors du procédé, il est fabriqué sur le plateau 40 de travail un élément intermédiaire formé par le support 44 et l'élément de garniture 10.

La buse 26 d'injection est rendue solidaire du corps 12 et l'organe d'obturation 30 est rendu solidaire dudit corps et de la buse 26 d'injection lors des étapes de fusion sélective des couches de poudre. Lors de la fabrication, le corps 12, la buse 26 d'injection et l'organe d'obturation 30 sont réalisés d'un seul tenant. Le canal 34 d'alimentation est formé lors de ces étapes de dépose et de fusion sélective des couches de poudre.

De sorte à rendre solidaire localement les couches en cours de formation de l'organe d'obturation 30 et de la buse 26 d'injection, un jeu théorique est prévu par modélisation entre la tête 36 dudit organe d'obturation et la surface frontale 26b de ladite buse en regard qui est compris entre 0,05 et 0,5 mm, et de préférence égal à 0,1 mm. Avec un tel jeu théorique, la poudre déposée présente localement entre la tête 36 et la surface frontale 26b est tout ou partie fusionnée par diffusion de chaleur. Cette poudre tout ou partie fusionnée par diffusion de chaleur est illustrée schématiquement à la figure 4 et référencée 46.

D'une façon analogue, un jeu théorique modélisé et compris dans la même plage de valeurs est prévu entre le pied de la tige 38 de support de l'organe d'obturation et la portion cylindrique 34a de grand diamètre du canal d'alimentation de sorte que la poudre déposée présente localement entre ce pied et cette portion est tout ou partie fusionnée par diffusion de chaleur. Ceci permet de solidariser localement l'organe d'obturation 30 et le corps 12. Cette poudre est illustrée schématiquement à la figure 5 et référencée 48. Ces deux zones dans lesquelles de la poudre est tout ou partie fusionnée par diffusion de chaleur, et non par frittage direct sous l'effet du faisceau énergétique, permet de soutenir l'organe d'obturation 30 lors de la fabrication de l'élément de garniture 10.

Après fabrication, l'élément intermédiaire formé par le support 44 et l'élément de garniture 10 est désolidarisé du plateau 40 de fabrication, par exemple par découpe par électro-érosion par fil. L'élément de garniture 10 peut ensuite être désolidarisé du support 44 également par découpe par électro-érosion par fil. Par la suite, l'organe d'obturation 30 est désolidarisé partiellement de la buse 26 d'injection et du corps 12 par tirage, pouvant par exemple être manuel, de sorte à être mobile entre la position de fermeture et d'ouverture de l'orifice 26a de sortie de ladite buse.

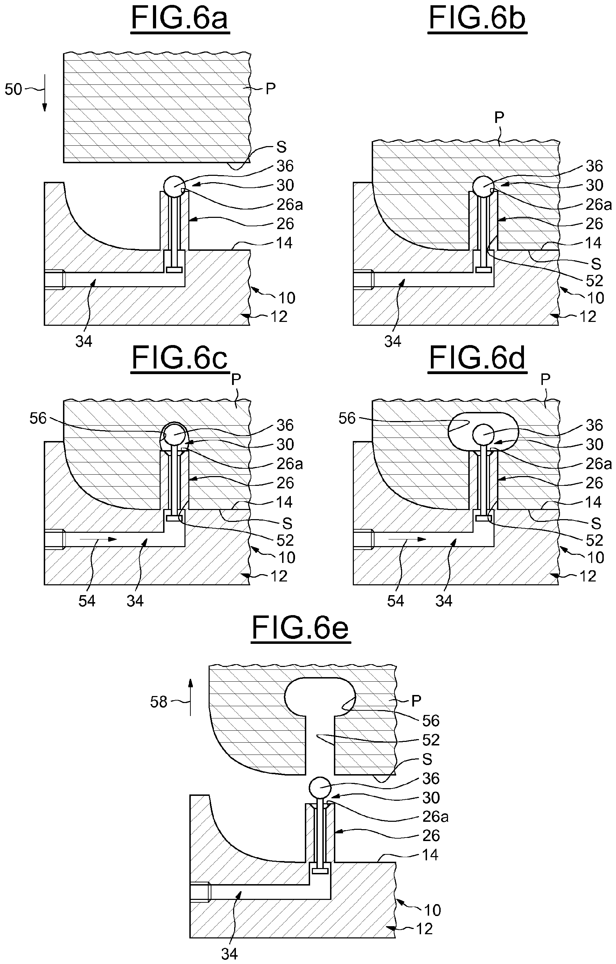

Les figures 6a à 6e illustrent partiellement des étapes de moulage d'un pneumatique P à l'aide de l'élément de garniture 10 qui est fixé à l'intérieur du moule associé (non représenté).

L'ébauche du pneumatique P non vulcanisée est amenée en contact contre la surface 14 de moulage de l'élément de garniture comme cela est illustré aux figures 6a et 6b. Le déplacement de l'ébauche non vulcanisée en direction de la surface 14 de moulage est illustré par la flèche référencée 50. Lors de cette étape de mise en contact non vulcanisée avec la surface 14 de moulage, l'organe d'obturation 30 est maintenu dans la position de fermeture de l'orifice 26a de sortie de la buse par la pression exercée par l'ébauche. Ceci permet d'éviter un fluage de la gomme de l'ébauche à l'intérieur du canal 34 d'alimentation. La surface S de l'ébauche du pneumatique venant en contact contre la surface 14 de moulage de l'élément de garniture forme une partie de la surface de roulement dudit pneumatique. La buse 26 d'injection s'étend dans l'épaisseur de la bande de roulement de l'ébauche du pneumatique P non vulcanisée. La buse 26 s'enfonce selon une direction sensiblement radiale en considérant l'axe de l'ébauche. Un évidement 52 de forme correspondante à la buse 26 d'injection est formé dans l'épaisseur de la bande de roulement. Cet évidement 52 s'étend à partir de la surface S de roulement.

Ensuite, après montée en température de l'ébauche à l'intérieur du moule et juste avant que la vulcanisation ne commence, un fluide est injecté à l'intérieur du canal 34 d'alimentation de l'élément de garniture. Cette injection de fluide est illustrée schématiquement par la flèche référencée 54 à la figure 6c. Sous l'effet de la pression du fluide injecté, l'organe d'obturation 30 passe de la position de fermeture à la position d'ouverture de l'orifice 26a de sortie de la buse d'injection. Lors de l'ouverture dudit orifice, une cavité 56 commence à se former dans l'épaisseur de l'ébauche du pneumatique P au voisinage immédiat de l'orifice 26a de sortie. La cavité 56 prolonge l'évidement 52 vers l'intérieur de l'ébauche.

L'injection de fluide se poursuit ensuite comme illustré à la figure 6d jusqu'à obtenir la taille souhaitée de la cavité 56, puis est ensuite arrêtée. Une fois l'injection de fluide stoppée, l'organe d'obturation 30 reste en position ouverte. L'ébauche du pneumatique P est maintenue à l'intérieur du moule jusqu'à être entièrement vulcanisée. Ensuite, lors d'une dernière étape, le pneumatique P est extrait hors du moule comme cela est illustré schématiquement par la flèche référencée 58 de la figure 6e.

Dans l'exemple de mise en œuvre du procédé de moulage du pneumatique décrit, la création de la cavité 56 est obtenue par injection d'un fluide dans la bande de roulement du pneumatique. Le fluide peut par exemple être une matière gazeuse telle que de l'air ou encore une matière liquide telle que de l'eau. En variante, il est possible de prévoir une injection de matière solide telle qu'un plastique ou une gomme différente de celle du pneumatique. Dans le cas d'une telle injection, la cavité créée par l'injection de matière solide est remplie simultanément par ladite matière.

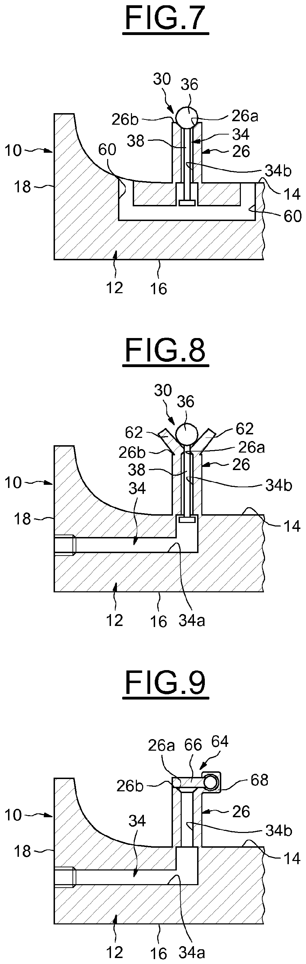

L'exemple de réalisation de l'élément de garniture 10 illustré à la figure 7, sur laquelle les éléments identiques portent les mêmes références, diffère du premier exemple décrit en ce que des conduits 60 d'éventation s'étendent à partir de la surface 14 de moulage dans l'épaisseur du corps 12. Les conduits 60 se rejoignent dans l'épaisseur du corps 12 et communiquent avec la portion cylindrique 34b du canal d'alimentation. Les conduits 60 sont formés lors des opérations de dépose et de fusion sélective des couches de poudre. Dans l'exemple de réalisation illustré, les conduits 60 sont au nombre de deux. Les conduits 60 d'éventation permettent d'éviter d'emprisonner de l'air entre la surface 14 de moulage de l'élément de garniture 10 et l'ébauche du pneumatique lors de l'étape de vulcanisation du pneumatique, et de réinjecter cet air dans l'épaisseur de la bande de par l'intermédiaire de la buse d'injection.

Dans l'exemple de réalisation illustré, le canal d'alimentation 34 est dépourvu de la portion cylindrique 34a de grand diamètre permettant le raccordement à une source extérieure pour l'injection de l'air. Seule la réintroduction de l'air présent initialement entre la surface 14 de moulage de l'élément de garniture et l'ébauche du pneumatique est utilisée pour former une cavité sous la surface de roulement du pneumatique. En variante, il pourrait cependant être possible de conserver la conception du canal 34 d'alimentation du premier exemple de réalisation et de prévoir des conduits d'éventation s'étendant à partir de la surface 14 de moulage de l'élément de garniture et débouchant dans la portion cylindrique 34b dudit canal.

L'exemple de réalisation illustré à la figure 8, sur laquelle les éléments identiques portent les mêmes références, diffère du premier exemple décrit uniquement en ce que l'élément de garniture 10 comprend deux oreilles 62 de support de la tête 36 de l'organe d'obturation. Les oreilles 62 s'étendent à partir de la surface frontale 26b de la buse en étant solidaires avec la tête 36. Les oreilles 62 sont venues de matière avec la buse 26 d'injection et la tête 36 de l'organe d'obturation. Les oreilles 62 sont formées lors des opérations de dépose et de fusion sélective des couches de poudre.

La fabrication de cet élément de garniture 10 peut être réalisée de façon identique au procédé de fabrication précédemment décrit, à savoir de façon inclinée par rapport à la surface de travail du plateau de fabrication associé via un support intermédiaire. Après fabrication, l'organe d'obturation 30 est désolidarisé partiellement de la buse 26 d'injection et du corps 12 par tirage, pouvant par exemple être manuel, de sorte à être mobile entre la position de fermeture et d'ouverture de l'orifice 26a de sortie de ladite buse. Les oreilles 62 servent uniquement lors la fabrication de l'élément de garniture 10 pour le support de l'organe d'obturation 30.

L'exemple de réalisation illustré à la figure 9, sur laquelle les éléments identiques portent les mêmes références, diffère du premier exemple décrit uniquement en ce que l'élément de garniture 10 comprend un organe d'obturation 64 mobile en rotation par rapport à la buse 26 d'injection et au corps 12. L'organe d'obturation se présente sous la forme d'un volet 66 articulé à rotation par l'intermédiaire d'une charnière 68 formée sur la buse d'injection 26. Le volet 66 et la charnière 68 sont formés lors des opérations de dépose et de fusion sélective des couches de poudre. Le volet 66 et la charnière 68 sont venues de matière avec la buse 26 d'injection. Après fabrication, le volet 66 est désolidarisé partiellement de la buse 26 de sorte à être mobile entre la position de fermeture et la position d'ouverture.

Dans les exemples de réalisation illustrés, chaque buse d'injection s'étend en saillie à partir de la surface de moulage du corps de l'élément de garniture. En variante, il pourrait être possible de prévoir alternativement ou en combinaison au moins une buse s'étendant en saillie à partir d'une surface frontale libre d'une des protubérances prévues pour mouler des découpures dans la bande de roulement du pneumatique.

Dans les exemples de réalisation illustrés, chaque buse d'injection est réalisée d'un seul tenant avec le corps de l'élément de garniture. En variante, il pourrait être possible de prévoir une buse d'injection qui reste fabriquée simultanément avec le corps et l'organe d'obturation lors des opérations de dépose et de fusion sélective des couches de poudre empilées mais qui est rendue mobile après fabrication entre une position rétractée à l'intérieur du corps et une position déployée dans laquelle elle s'étend en saillie par rapport à la surface de moulage dudit corps.

## Revendications

1. Elément de garniture pour moule de pneumatique comprenant un corps (12) délimitant une surface de moulage (14) destinée à mouler au moins en partie une surface de roulement du pneumatique, **caractérisé en ce que** l'élément de garniture comprend en outre au moins une buse d'injection (26) disposée sur le corps et pourvue d'au moins un orifice de sortie (26a), au moins un canal d'alimentation (34) s'étendant à l'intérieur du corps et de la buse d'injection en étant en communication avec ledit orifice de sortie, et au moins un organe d'obturation (30 ; 64) mobile par rapport à la buse d'injection entre une position de fermeture et une position d'ouverture dudit orifice de sortie, le corps (12), la buse d'injection (26) et l'organe d'obturation (30 ; 64) étant fabriqués par dépose et fusion sélective de couches de poudre empilées.

2. Elément de garniture selon la revendication 1, dans lequel la buse d'injection (26) est venue de matière avec le corps (12) et s'étend en saillie par rapport à la surface de moulage (14) dudit corps.

3. Elément de garniture selon la revendication 1 ou 2, dans lequel l'organe d'obturation (30 ; 64) est mobile de la position de fermeture vers la position d'ouverture sous l'effet de la pression d'un fluide ou d'un solide introduit dans le canal d'alimentation (34).

4. Elément de garniture selon l'une quelconque des revendications précédentes, dans lequel l'orifice de sortie (26a) débouche sur une surface frontale (26b) de la buse d'injection sensiblement parallèle à la surface de moulage (14) du corps.

5. Elément de garniture selon l'une quelconque des revendications précédentes, dans lequel le canal d'alimentation (34) comprend des moyens de raccordement à une source d'alimentation extérieure audit élément.

6. Elément de garniture selon l'une quelconque des revendications précédentes, dans lequel l'organe d'obturation (30) est mobile en translation par rapport à la buse d'injection (26).

7. Elément de garniture selon la revendication 6, dans lequel l'organe d'obturation (30) comprend un piston pourvu d'une tige (38) montée à l'intérieur du canal d'alimentation (34) et d'une tête (36) d'obturation apte à obturer ledit orifice de sortie dans la position de fermeture.

8. Elément de garniture selon l'une quelconque des revendications 1 à 5, dans lequel l'organe d'obturation (64) est mobile à rotation par rapport à la buse d'injection (26).

9. Elément de garniture selon la revendication 8, dans lequel l'organe d'obturation (64) comprend un volet (66) venant en appui contre une surface frontale (26b) de la buse d'injection sensiblement parallèle à la surface de moulage (14) du corps dans la position de fermeture du corps.

10. Elément de garniture selon l'une quelconque des revendications précédentes, dans lequel le corps (12) comprend des moyens d'éventation (60) s'étendant à partir de la surface de moulage (14) et destinés à permettre une évacuation d'air lors du moulage du pneumatique, lesdits moyens d'éventation étant en communication avec le canal d'alimentation (34).

11. Elément de garniture selon l'une quelconque des revendications précédentes, comprenant une pluralité de protubérances (22, 24) s'étendant en saillie à partir de la surface de moulage (14) du corps et destinées à mouler des découpures dans la bande de roulement du pneumatique.

12. Elément de garniture selon la revendication 11, dans lequel la buse d'injection s'étend en saillie à partir d'une surface frontale libre d'une desdites protubérances.

13. Elément de garniture selon l'une quelconque des revendications 1 à 11, dans lequel la buse d'injection (26) s'étend en saillie à partir de la surface de moulage (14) dudit corps.

14. Moule pour pneumatique du type comprenant une bande de roulement et deux flancs latéraux, le moule comprenant des première et deuxième coquilles destinées à assurer le moulage des flancs latéraux du pneumatique, et une pluralité de secteurs répartis dans le sens circonférentiel et destinés à assurer le moulage de la bande de roulement dudit pneumatique, chaque secteur comprenant au moins un élément de garniture selon l'une quelconque des revendications précédentes.

15. Procédé de fabrication d'au moins un élément de garniture, l'élément de garniture comprenant un corps délimitant une surface de moulage destinée à mouler au moins en partie une surface de roulement du pneumatique, **caractérisé en ce qu'**il comprend les étapes suivantes :
- a) fabrication par dépose et fusion sélective de couches de poudre empilées du corps de l'élément de garniture, d'au moins une buse d'injection disposée sur ledit corps et pourvue d'au moins un orifice de sortie, et d'un organe d'obturation dudit orifice de sortie, la buse d'injection étant rendue solidaire du corps et l'organe d'obturation étant rendu solidaire au moins de ladite buse lors des étapes de fusion sélective des couches de poudre,
- b) formation au moins partielle d'au moins un canal d'alimentation s'étendant à l'intérieur du corps et de la buse d'injection en étant en communication avec l'orifice de sortie de ladite buse au cours des étapes de dépose et de fusion sélective des couches de poudre, et
- c) désolidarisation partielle de l'organe d'obturation et de la buse d'injection après les étapes de dépose et de fusion sélective des couches de poudre pour permettre une mobilité de l'organe d'obturation entre une position de fermeture et une position d'ouverture de l'orifice de sortie de la buse d'injection.

16. Procédé selon la revendication 15, dans lequel selon une fusion modélisée des couches de poudre, un jeu est prévu entre une partie de l'organe d'obturation et une partie en regard de la buse d'injection qui est compris entre 0,05 et 0,5 mm, et de préférence égal à 0,1 mm de sorte que la poudre déposée présente entre lesdites parties en regard est tout ou partie fusionnée par diffusion de chaleur rendant solidaires localement l'organe d'obturation et la buse d'injection.

17. Procédé selon la revendication 15 ou 16, dans lequel l'organe d'obturation comprend un piston pourvu d'une tige montée à l'intérieur du canal d'alimentation et d'une tête d'obturation, et dans lequel le corps de l'élément de garniture est fabriqué de sorte à s'étendre de façon inclinée par rapport à un plateau de fabrication sur lequel est déposée et fusionnée une première couche de poudre.

18. Procédé de moulage d'un pneumatique à l'aide d'un moule comprenant des première et deuxième coquilles destinées à assurer le moulage des flancs latéraux du pneumatique, et une pluralité de secteurs répartis dans le sens circonférentiel et destinés à assurer le moulage de la bande de roulement dudit pneumatique, dans lequel l'ébauche du pneumatique non vulcanisée à mouler est mise en contact avec les coquilles et les secteurs du moule, l'ébauche est chauffée, puis un fluide est injecté sous la surface extérieure de l'ébauche qui est en contact avec le moule et qui est destinée à former la surface de roulement du pneumatique pour créer au moins une cavité dans l'épaisseur de ladite ébauche et sous ladite surface de roulement.

## Patentansprüche

1. Einsatzelement für eine Luftreifenform, das einen Körper (12) enthält, der eine Formfläche (14) begrenzt, die dazu bestimmt ist, eine Lauffläche des Luftreifens zumindest zum Teil zu formen, **dadurch gekennzeichnet, dass** das Einsatzelement außerdem mindestens eine Einspritzdüse (26), die auf dem Körper angeordnet und mit mindestens einer Ausgangsöffnung (26a) versehen ist, mindestens einen Versorgungskanal (34), der sich innerhalb des Körpers und der Einspritzdüse erstreckt, indem er mit der Ausgangsöffnung in Verbindung steht, und mindestens ein Verschlussorgan (30; 64) enthält, das bezüglich der Einspritzdüse zwischen einer Schließstellung und einer Öffnungsstellung der Ausgangsöffnung beweglich ist, wobei der Körper (12), die Einspritzdüse (26) und das Verschlussorgan (30; 64) durch Auftragen und selektives Schmelzen von aufeinander geschichteten Pulverschichten hergestellt werden.

2. Einsatzelement nach Anspruch 1, wobei die Einspritzdüse (26) aus dem gleichen Material wie der Körper (12) besteht und bezüglich der Formfläche (14) des Körpers vorsteht.

3. Einsatzelement nach Anspruch 1 oder 2, wobei das Verschlussorgan (30; 64) unter der Wirkung des Drucks eines in den Versorgungskanal (34) eingeführten Fluids oder Feststoffs von der Schließstellung in die Öffnungsstellung beweglich ist.

4. Einsatzelement nach einem der vorhergehenden Ansprüche, wobei die Ausgangsöffnung (26a) auf einer Stirnfläche (26b) der Einspritzdüse im Wesentlichen parallel zur Formfläche (14) des Körpers mündet.

5. Einsatzelement nach einem der vorhergehenden Ansprüche, wobei der Versorgungskanal (34) Anschlusseinrichtungen an eine Versorgungsquelle außerhalb des Elements enthält.

6. Einsatzelement nach einem der vorhergehenden Ansprüche, wobei das Verschlussorgan (30) bezüglich der Einspritzdüse (26) translationsbeweglich ist.

7. Einsatzelement nach Anspruch 6, wobei das Verschlussorgan (30) einen Kolben enthält, der mit einer im Inneren des Versorgungskanals (34) montierten Stange (38) und mit einem Verschlusskopf (36) versehen ist, der die Ausgangsöffnung in der Schließstellung verschließen kann.

8. Einsatzelement nach einem der Ansprüche 1 bis 5, wobei das Verschlussorgan (64) bezüglich der Einspritzdüse (26) drehbeweglich ist.

9. Einsatzelement nach Anspruch 8, wobei das Verschlussorgan (64) eine Klappe (66) enthält, die in der Schließstellung des Körpers gegen eine Stirnfläche (26b) der Einspritzdüse im Wesentlichen parallel zur Formfläche (14) des Körpers in Auflage kommt.

10. Einsatzelement nach einem der vorhergehenden Ansprüche, wobei der Körper (12) Entlüftungseinrichtungen (60) enthält, die sich ausgehend von der Formfläche (14) erstrecken und dazu bestimmt sind, eine Luftabsaugung beim Formen des Luftreifens zu erlauben, wobei die Entlüftungseinrichtungen mit dem Versorgungskanal (34) in Verbindung stehen.

11. Einsatzelement nach einem der vorhergehenden Ansprüche, das eine Vielzahl von Ausstülpungen (22, 24) enthält, die ausgehend von der Formfläche (14) des Körpers vorstehen und dazu bestimmt sind, Ausschnitte im Laufstreifen des Luftreifens zu formen.

12. Einsatzelement nach Anspruch 11, wobei die Einspritzdüse ausgehend von einer freien Stirnfläche einer der Ausstülpungen vorsteht.

13. Einsatzelement nach einem der Ansprüche 1 bis 11, wobei die Einspritzdüse (26) ausgehend von der Formfläche (14) des Körpers vorsteht.

14. Form für einen Luftreifen der Art mit einem Laufstreifen und zwei Seitenflanken, wobei die Form erste und zweite Schalen, die dazu bestimmt sind, das Formen der Seitenflanken des Luftreifens zu gewährleisten, und eine Vielzahl von Sektoren enthält, die in Umfangsrichtung verteilt und dazu bestimmt sind, das Formen des Laufstreifens des Luftreifens zu gewährleisten, wobei jeder Sektor mindestens ein Einsatzelement nach einem der vorhergehenden Ansprüche enthält.

15. Verfahren zur Herstellung mindestens eines Einsatzelements, wobei das Einsatzelement einen Körper enthält, der mindestens eine Formfläche begrenzt, die dazu bestimmt ist, eine Lauffläche des Luftreifens zumindest zum Teil zu formen, **dadurch gekennzeichnet, dass** es die folgenden Schritte enthält:
a) Herstellen des Körpers des Einsatzelements, mindestens einer Einspritzdüse, die auf dem Körper angeordnet und mit mindestens einer Ausgangsöffnung versehen ist, und eines Verschlussorgans der Ausgangsöffnung durch Auftragen und selektives Schmelzen von geschichteten Pulverschichten, wobei während der Schritte des selektiven Schmelzens der Pulverschichten die Einspritzdüse fest mit dem Körper verbunden und das Verschlussorgan mindestens fest mit der Düse verbunden wird,
b) zumindest teilweise Bildung mindestens eines Versorgungskanals, der sich innerhalb des Körpers und der Einspritzdüse erstreckt, indem er mit der Ausgangsöffnung der Düse in Verbindung steht, während der Schritte des Auftragens und des selektiven Schmelzens der Pulverschichten, und
c) teilweises Trennen des Verschlussorgans und der Einspritzdüse nach den Schritten des Auftragens und des selektiven Schmelzens der Pulverschichten, um eine Beweglichkeit des Verschlussorgans zwischen einer Schließstellung und einer Öffnungsstellung der Ausgangsöffnung der Einspritzdüse zu erlauben.

16. Verfahren nach Anspruch 15, wobei gemäß einer modellisierten Schmelzung der Pulverschichten ein Spielraum zwischen einem Teil des Verschlussorgans und einem gegenüberliegenden Teil der Einspritzdüse vorgesehen ist, der zwischen 0,05 und 0,5 mm liegt und vorzugsweise gleich 0,1 mm ist, so dass das zwischen den gegenüberliegenden Teilen vorhandene aufgetragene Pulver durch Wärmeübertragung ganz oder teilweise geschmolzen wird, was das Verschlussorgan und die Einspritzdüse lokal fest miteinander verbindet.

17. Verfahren nach Anspruch 15 oder 16, wobei das Verschlussorgan einen Kolben enthält, der mit einer im Inneren des Versorgungskanals montierten Stange und mit einem Verschlusskopf versehen ist, und wobei der Körper des Einsatzelements so hergestellt wird, dass er sich bezüglich einer Herstellungsebene geneigt erstreckt, auf die eine erste Pulverschicht aufgetragen und geschmolzen wird.

18. Verfahren zum Formen eines Luftreifens mit Hilfe einer Form, die erste und zweite Schalen, die dazu bestimmt sind, das Formen der Seitenflanken des Luftreifens zu gewährleisten, und eine Vielzahl von Sektoren enthält, die in Umfangsrichtung verteilt und dazu bestimmt sind, das Formen des Laufstreifens des Luftreifens zu gewährleisten, wobei der nicht vulkanisierte Rohling des zu formenden Luftreifens mit den Schalen und den Sektoren der Form in Kontakt gebracht wird, der Rohling erwärmt wird, dann ein Fluid unter die Außenfläche des Rohlings injiziert wird, die mit der Form in Kontakt und dazu bestimmt ist, die Lauffläche des Luftreifens zu formen, um mindestens einen Hohlraum in der Dicke des Rohlings und unter der Lauffläche zu erzeugen.

## Claims

1. Matrix element for a tyre mould comprising a body (12) delimiting a moulding surface (14) intended to at least partially mould a tread surface of the tyre, **characterized in that** the matrix element further comprises at least one injection nozzle (26) arranged on the body and provided with at least one outlet orifice (26a), at least one supply duct (34) extending inside the body and the injection nozzle while being in communication with the said outlet orifice, and at least one shut-off member (30; 64) mobile with respect to the injection nozzle between an outlet orifice closed position and an outlet orifice open position, the body (12), the injection nozzle (26) and the shut-off member (30; 64) being manufactured by the deposition and selective melting of stacked layers of powder.

2. Matrix element according to Claim 1, in which the injection nozzle (26) is made as one with the body (12) and projects out with respect to the moulding surface (14) of the said body.

3. Matrix element according to Claim 1 or 2, in which the shut-off member (30; 64) is mobile from the closed position to the open position under the effect of the pressure of a fluid or of a solid introduced into the supply duct (34).

4. Matrix element according to any one of the preceding claims, in which the outlet orifice (26a) opens onto a frontal surface (26b) of the injection nozzle substantially parallel to the moulding surface (14) of the body.

5. Matrix element according to any one of the preceding claims, in which the supply duct (34) comprises means of connection to a supply source external to the said element.

6. Matrix element according to any one of the preceding claims, in which the shut-off member (30) is mobile in translation with respect to the injection nozzle (26).

7. Matrix element according to Claim 6, in which the shut-off member (30) comprises a piston provided with a rod (38) mounted inside the supply duct (34) and with a shut-off head (36) able to shut off the said outlet orifice in the closed position.

8. Matrix element according to any one of Claims 1 to 5, in which the shut-off member (64) is rotationally mobile with respect to the injection nozzle (26).

9. Matrix element according to Claim 8, in which the shut-off member (64) comprises a flap (66) that comes to bear against a frontal surface (26b) of the injection nozzle substantially parallel to the moulding surface (14) of the body in the body closed position.

10. Matrix element according to any one of the preceding claims, in which the body (12) comprises venting means (60) extending from the moulding surface (14) and intended to allow air to be evacuated while the tyre is being moulded, the said venting means being in communication with the supply duct (34).

11. Matrix element according to any one of the preceding claims, comprising a plurality of protuberances (22, 24) extending out from the moulding surface (14) of the body and intended to mould cuts in the tread of the tyre.

12. Matrix element according to Claim 11, in which the injection nozzle extends out from a free frontal surface of one of the said protuberances.

13. Matrix element according to any one of Claims 1 to 11, in which the injection nozzle (26) extends out from the moulding surface (14) of the said body.

14. Mould for a tyre of the type comprising a tread and two lateral sidewalls, the mould comprising first and second shells which are intended to mould the lateral sidewalls of the tyre, and a plurality of segments distributed in the circumferential direction and intended to mould the tread of the said tyre, each segment comprising at least one matrix element according to any one of the preceding claims.

15. Method of manufacturing at least one matrix element, the matrix element comprising a body delimiting a moulding surface intended to at least partially mould a tread surface of the tyre, **characterized in that** it comprises the following steps:
- a) the manufacture, by deposition and selective melting of stacked layers of powder, of the body of the matrix element, of at least one injection nozzle arranged on the said body and provided with at least one outlet orifice, and of a shut-off member for shutting off the said outlet orifice, the injection nozzle being rendered as one with the body and the shut-off member being rendered as one with at least the said nozzle during the steps of selective melting of the layers of powder,
- b) at least partial formation of at least one supply duct extending inside the body and the injection nozzle and being in communication with the outlet orifice of the said nozzle during the steps of deposition and selective melting of the layers of powder, and
- c) partial separation of the shut-off member and of the injection nozzle after the steps of deposition and selective melting of the layers of powder so as to give the shut-off member mobility between positions in which the outlet orifice of the injection nozzle is closed and open.

16. Method according to Claim 15, in which, according to a modelled melting of the layers of powder, a clearance is provided between part of the shut-off member and a facing part of the injection nozzle, which clearance is comprised between 0.05 and 0.5 mm and preferably equal to 0.1 mm, so that the deposited powder present between the said facing parts is completely or partially melted by the diffusion of heat locally rendering the shut-off member and the injection nozzle as one.

17. Method according to Claim 15 or 16, in which the shut-off member comprises a piston provided with a rod mounted inside the supply duct and with a shut-off head, and in which the body of the matrix element is manufactured in such a way as to extend in an inclined fashion with respect to a build platform on which a first layer of powder is deposited and melted.

18. Method of moulding a tyre using a mould comprising first and second shells intended to mould the lateral sidewalls of the tyre, and a plurality of segments distributed in the circumferential direction and intended to mould the tread of the said tyre, in which method the non-vulcanized green tyre that is to be moulded is brought into contact with the shells and the segments of the mould, the green tyre is heated, and then a fluid is injected under the exterior surface of the green tyre which is in contact with the mould and which is intended to form the tread surface of the tyre so as to create at least one cavity in the thickness of the said green tyre and beneath the said tread surface.
